# DEMANDE DE BREVET EUROPEEN

(11) **EP 3 570 212 A1**
(43) Date de publication de la demande: **20.11.2019**
(21) Numéro de dépôt: 19174226.1
(22) Date de dépôt: 13.05.2019
(51) Int. Cl.: G06K 9/00, G06K 9/46, G06K 9/52

(54) **PROCÉDÉ DE RECONNAISSANCE DE CARACTÈRES**

(30) Priorité: 17.05.2018 FR 1854140
(71) Demandeur: Idemia Identity & Security France, 92400 Courbevoie (FR)
(72) Inventeur: GOUBALAN, Sègbédji, 92400 COURBEVOIE (FR); VIGUIER, Thierry, 92400 COURBEVOIE (FR)
(74) Mandataire: Lavialle, Bruno François Stéphane

(57) **Abrégé**

Procédé de reconnaissance de caractères dans une image d'un document comprenant au moins un champ alphanumérique, le procédé comprenant les étapes de :
- renforcer un contraste de l'image pour faire ressortir les caractères présents dans l'image ;
- détecter des contours d'objets présents dans l'image pour créer un masque faisant ressortir les caractères ;
- segmenter l'image en utilisant un arbre à composantes connexes et en lui appliquant le masque de manière à extraire de l'image les caractères ;
- effectuer une reconnaissance de caractères sur les objets extraits.

Dispositif pour la mise en oeuvre de ce procédé.

## Description

La présente invention concerne le domaine du traitement d'image aux fins de réaliser une reconnaissance de caractères dans tout document écrit comme par exemple un titre de transport ou un document d'identité.

### Arrière-plan de l'invention

Un document d'identité, tel qu'un passeport ou une carte nationale d'identité, comporte des champs de texte contenant sous forme de suites de caractères alphanumériques, par exemple, le nom, les prénoms, la date et le lieu de naissance du titulaire du document d'identité, ainsi que le nom de l'autorité ayant délivré le document d'identité et la date de délivrance.

Certaines opérations administratives nécessitent de disposer d'un fac-simile du document et de ressaisir le contenu de certains au moins de ces champs. Pour accélérer le traitement, il est connu de numériser le document et d'extraire le contenu des champs de texte en utilisant un programme informatique mettant en oeuvre un algorithme de reconnaissance de caractères.

Il est par ailleurs connu d'ajouter à ces documents des éléments de sécurité destinés à complexifier la falsification et la reproduction non autorisée de ce document. Ces éléments de sécurité sont souvent présents à l'arrière-plan du document et comprennent par exemple des décors ou de fines lignes formant des motifs ou des caractères.

Or, il arrive que ces éléments de sécurité, en particulier lorsqu'ils sont fortement contrastés et avoisinent un champ de texte, soient interprétés comme étant des caractères par le programme de reconnaissance de caractères. Il en résulte des erreurs préjudiciables à l'efficacité du traitement d'images appliqué aux documents et par voie de conséquence à l'accomplissement des formalités administratives.

Il est connu du document « Edge-based Component-Trees for Multi-Channel Image Segmentation », T. Böttger et D. Gutermuth, https://arxiv.org/pdf/1705.01906v1.pdf, 4 mai 2017, les méthodes de segmentation MSER (de l'anglais « Maximally Stable Extremal Regions ») et MSHR (de l'anglais « Maximally Stable Homogeneous Régions »). Ces deux méthodes sont performantes pour l'extraction de régions homogènes de l'image et la deuxième est méthode est particulièrement adaptée à la segmentation de caractères préalablement à une reconnaissance de chacun des caractères segmentés. Ces méthodes ne sont néanmoins utilisables qu'en disposant d'informations spécifiques aux images comme les paramètres de capture ou le type de documents représentés sur les images.

Il est également connu du document « A Tree of shapes for multivariate images », Edwin Calinet, https://pastel.archives-ouvertes.fr/tel-01280131/document du 27 novembre 2015, les arbres des formes (ToS - « Tree of Shapes »), arbres des formes multivariable (MToS - « Multivariate Tree of Shapes ») et arbres à composantes connexes sont utilisables pour faire de la segmentation d'images. On rappelle qu'un arbre à composantes connexes est une représentation d'une image sous la forme d'un arbre ayant des neouds représentant chacun un objet de l'image. Le document en question présente des algorithmes permettant de résoudre le problème posé par la complexité de l'arbre dans le cadre d'une segmentation automatique de l'image. Cette méthode est cependant peu efficace pour extraire des caractères traversés par les lignes de niveau du fond se trouvant en arrière-plan du caractère.

### Objet de l'invention

Un but de l'invention est de fournir un moyen pour fiabiliser la reconnaissance de caractères notamment lorsque le fond est hétérogène et/ou lorsque le fond n'est pas connu a priori.

### Bref exposé de l'invention

A cet effet, on prévoit, selon l'invention, un procédé de reconnaissance de caractères dans une image d'un document comprenant au moins un champ alphanumérique, le procédé comprenant les étapes de :
- renforcer un contraste de l'image pour faire ressortir les caractères présents dans l'image ;
- détecter des contours d'objets présents dans l'image pour créer un masque faisant ressortir les caractères ;
- segmenter l'image en utilisant un arbre à composantes connexes et en lui appliquant le masque de manière à extraire de l'image les caractères ;
- effectuer une reconnaissance de caractères sur les objets extraits.

Le procédé de l'invention permet, sans intervention humaine, de limiter l'influence de l'arrière-plan de l'image et des artefacts de numérisation sur l'extraction des caractères alphanumériques présents dans l'image, ce qui permet d'améliorer la fiabilité de la reconnaissance automatique de caractères. En effet, le renforcement de contraste et l'application d'un masque propre à l'image autorisent une segmentation automatique de l'image permettant d'en supprimer le fond et l'extraction des caractères. Ceci permet en outre d'effectuer une reconnaissance de caractères même à partir d'une numérisation ayant une qualité qui aurait été considérée comme insuffisante pour réaliser une reconnaissance de caractères au moyen des procédés de l'art antérieur.

De préférence, le renforcement de contraste est réalisé en saturant les canaux des images (les images étant en couleurs ou en niveaux de gris) et en faisant ressortir les intensités noires souvent propres aux caractères dans les documents d'identité. Il est donc possible de s'adapter au contraste de l'image initiale et de limiter la création d'artefacts. Ce mode de renforcement de contraste est particulièrement robuste.

L'invention a également pour objet un dispositif de reconnaissance de caractère comprenant une unité informatique (1) pourvue des moyens de sa liaison à un appareil de numérisation agencé pour réaliser une numérisation d'un document écrit, caractérisé en ce que l'unité informatique (1) comprend au moins un processeur et une mémoire contenant un programme mettant en oeuvre le procédé selon l'invention.

D'autres caractéristiques et avantages de l'invention ressortiront à la lecture de la description qui suit d'un mode de mise en oeuvre particulier non limitatif de l'invention.

### Brève description des dessins

Il sera fait référence aux dessins annexés, parmi lesquels :
- la figure 1 est une vue schématique d'un dispositif pour la mise en oeuvre du procédé de l'invention ;
- la figure 2 est une vue schématique d'une image d'un document comportant des caractères reconnaissables par le procédé selon l'invention ;
- la figure 3 est un schéma montrant les différentes étapes du procédé selon l'invention ;
- les figures 4.a et 4.b sont des vues de détail de cette image avant et après un renforcement de contraste ;
- les figures 5.a et 5.b sont des vues de détail de cette image avant et après un renforcement de contraste ;

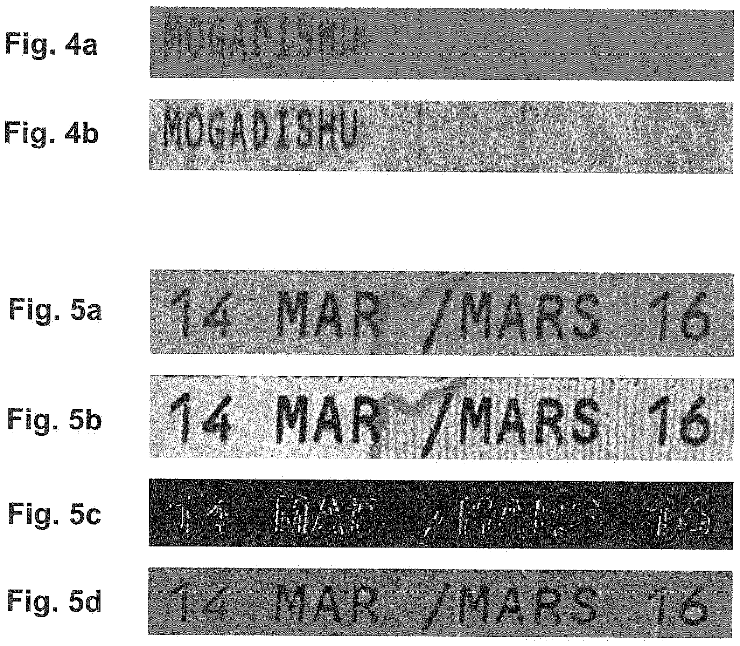

- les figures 5.c et 5.d sont des vues de détail de cette image pendant la segmentation de l'image au moyen d'un masque.

### Exposé détaillé d'un mode de mise en oeuvre de l'invention

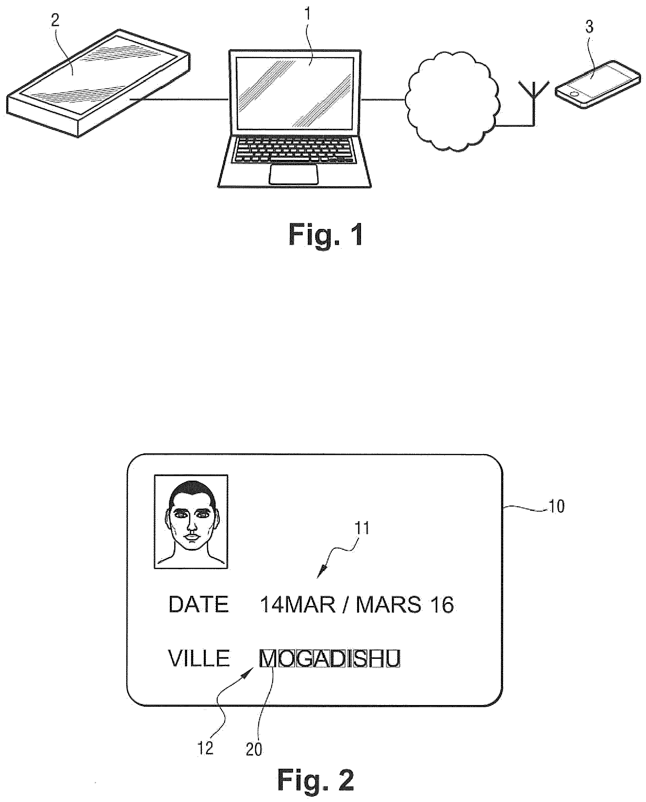

En référence à la figure 1, le procédé de l'invention est mis en oeuvre au moyen d'un dispositif comprenant une unité informatique 1 reliée à un appareil de numérisation agencé pour réaliser une numérisation d'un document écrit. L'unité informatique 1 est un ordinateur qui comprend au moins un processeur et une mémoire contenant un programme d'acquisition d'image et un programme mettant en oeuvre le procédé de l'invention. Le processeur est agencé pour exécuter ces programmes. L'appareil de numérisation est par exemple un scanner 2 dédié à la numérisation de document écrit (couramment appelé scanner à plat), ou bien un capteur d'image d'un terminal de communication tel qu'un ordiphone 3 (plus couramment désigné sous sa dénomination anglaise « smartphone ») connectable à l'unité informatique 1 via un réseau tel que le réseau Internet. Le scanner 2 est ici piloté directement par l'unité informatique 1 pour réaliser l'acquisition de l'image du document. En variante, le scanner 2 peut être relié à une autre unité informatique qui pilotera l'acquisition de l'image et enverra l'image à l'unité informatique 1 qui réalisera elle le traitement de l'image et la reconnaissance de caractères proprement dite. Dans le cas d'une capture par l'ordiphone 3, l'utilisateur commande l'acquisition de l'image du document écrit directement à partir de l'ordiphone 3 puis transmet cette image à l'unité informatique 1 pour que cette dernière assure le traitement de l'image et la reconnaissance de caractères proprement dite. L'appareil de numérisation est dans tous les cas agencé pour capturer une image du document écrit ayant une résolution suffisante pour permettre d'extraire des caractères alphanumériques qui seraient présents dans l'image et de reconnaître lesdits caractères.

Le document écrit est ici plus particulièrement un document d'identité tel qu'une carte d'identité ou un passeport.

A la figure 2 est représentée une image 10 de ce document d'identité. L'image 10 a été capturée par l'appareil de numérisation. Sur cette image 10, on peut voir que le document d'identité comprend une photographie de son titulaire et des champs de caractères alphanumériques, à savoir ici un champ « Date » 11 et un champ « Ville » 12 . Evidemment, le document d'identité comporte en réalité d'autres champs de caractères alphanumériques - tels que des champs « Nom », « Prénoms », « Date de naissance », « Lieu de naissance », « Nationalité », « Adresse », « Date de fin de validité » - qui n'ont pas été représentés ici. Dans la suite de la description, le mot « caractères » seul sera employé pour désigner les caractères alphanumériques. Le document d'identité comporte par ailleurs des éléments de sécurité ou de décor susceptibles d'interférer avec les caractères écrits (non représentés sur la figure 2).

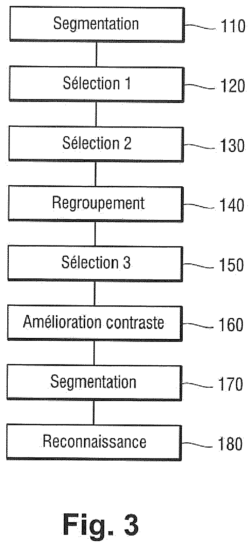

Le procédé de l'invention mis en oeuvre par le programme exécuté par l'unité informatique 1 comprend les étapes suivantes (figure 3) :
- segmenter l'image pour identifier dans celle-ci des objets (étape 110) ;
- définir une boîte englobante 20 autour de chaque objet et effectuer une première sélection pour sélectionner les boîtes englobantes contenant supposément un caractère en fonction d'au moins une caractéristique dimensionnelle théorique d'un caractère alphanumérique (étape 120) ;
- effectuer une deuxième sélection comprenant l'application à chaque boîte englobante sélectionnée de descripteurs de forme et la mise en oeuvre d'un algorithme de prise de décision pour sélectionner, sur la base des descripteurs, les boîtes englobantes contenant supposément un caractère (étape 130) ;
- regrouper les boîtes englobantes en fonction de positions relatives des boîtes englobantes (étape 140) ;
- effectuer une troisième sélection en divisant chacune de ces boîtes englobantes en une pluralité de cellules pour chacune desquelles est déterminé un descripteur de texture sous forme d'un histogramme de gradient orienté, les histogrammes étant ensuite concaténés et un algorithme de prise de décision étant mis en oeuvre pour sélectionner, sur la base des descripteurs, les boîtes englobantes contenant supposément un caractère (étape 150) ;
- améliorer un contraste de l'image et détecter des contours d'objets présents dans l'image de manière à créer un masque faisant ressortir les caractères (étape 160) ;
- segmenter l'image en appliquant le masque à l'image pour en extraire les objets visibles au travers du masque (étape 170) ;
- effectuer une reconnaissance de caractères sur les boîtes englobantes finalement sélectionnées (étape 180).

Ces étapes vont maintenant être détaillées.

L'étape 110 consiste ici à appliquer sur l'image un filtre alterné séquentiel qui est un filtre morphologique mathématique. En pratique, le programme balaye l'image avec une fenêtre géométrique (couramment appelée élément structurant) qui est en forme de cercle (mais qui pourrait être rectangulaire voire linéaire ou autre) de 5 à 10 pixels de rayon et élimine tout ce qui rentre en totalité dans ladite fenêtre (opération couramment appelée érosion) et dilate toute partie d'un objet qui ne rentre pas en totalité dans la fenêtre. Compte tenu des dimensions de la fenêtre, un caractère ne rentrera pas en totalité à l'intérieur de la fenêtre et sera donc dilaté, le reste est nécessairement du bruit et est éliminé. De préférence, plusieurs passes sont effectuées en augmentant entre chaque les dimensions de la fenêtre pour filtrer progressivement le bruit de l'image. En variante, cette étape peut être réalisée par la mise en oeuvre d'un algorithme de type MSER (de l'anglais « Maximally stable extremal régions ») ou en filtrant l'image en utilisant un seuil correspondant à une intensité théorique d'un caractère (quand le seuil est atteint, l'objet est considéré comme étant un caractère ; quand le seuil n'est pas atteint, l'objet n'est pas un caractère).

A l'issue de cette étape, le programme a donc fait ressortir des objets (qu'on pourrait appeler aussi des composantes connexes) qui comprennent des caractères alphanumériques ainsi que d'autres objets comprenant des éléments qui n'en sont pas, comme par exemple des éléments de sécurité ou de décor. Néanmoins, à ce stade, une partie non négligeable de ces éléments non-désirés en ont été exclus.

A l'étape 120, sur chacun des objets restant dans l'image, le programme applique une boîte englobante 20 (visible sur la figure 2) respectant plusieurs critères géométriques théoriques des caractères, à savoir : la hauteur, la largeur et/ou un rapport de dimensions (ou AR de l'anglais « aspect ratio » ; hauteur / largeur par exemple). Si un objet, et donc sa boîte englobante 20, ont une hauteur et une largeur (ou un rapport de celle-ci) correspondant à celles théoriques d'un caractère, c'est un caractère alphanumérique. On peut donc sélectionner des objets qui peuvent correspondre à des caractères sur la base de critères géométriques.

Pour sélectionner automatiquement les objets correspondant à des caractères alphanumériques à l'étape 130, le programme met en oeuvre un algorithme de prise de décision (ou plus couramment appelé classifieur). Sur chaque objet retenu précédemment, on détermine plusieurs types de descripteurs de forme, à savoir ici :
- les moments de Fourier,
- les moments de Krawtchouk.

On rappelle qu'un moment est une formule appliquée sur un pixel ou un ensemble de pixels permettant de décrire la structure qu'on essaie d'appréhender, à savoir ici un caractère. D'autres descripteurs pourraient être utilisés à la place ou en plus des moments de Fourier et/ou des moments de Krawtchouk. Cependant, l'utilisation combinée de ces deux types de descripteurs donnent des résultats remarquables.

Les moments de Fourier sont utilisés dans un classifieur (ici de type SVM de l'anglais « Support Vector Machine ») afin de produire une première sortie caractère/non-caractère.

Les moments de Krawtchouk sont utilisés dans un classifieur (ici encore de type SVM) afin de produire une deuxième sortie caractère/non-caractère.

Ces deux sorties sont ensuite concaténées pour former un vecteur d'entrée d'un classifieur (ici encore de type SVM) fournissant une troisième sortie. Cette troisième sortie est comparée à un seuil pour fournir une décision binaire : « caractère » ou « pas caractère ». De préférence, pour former le vecteur d'entrée, on pondère la première sortie et la deuxième sortie pour chaque objet par exemple en fonction des performances des descripteurs compte-tenu du type d'arrière-plan.

A la suite de cette opération, est obtenue une image contenant les objets dépourvus pour la plupart des éventuelles tâches et bruit initialement présents dans l'image, souvent dûs à la présence des éléments de sécurité ou de décor du document.

A l'étape 140, le programme opère un regroupement des caractères sous forme d'un ou plusieurs mots ou lignes de texte en fonction de critères géométriques qui, en plus de la hauteur, de la largeur et/ou du rapport de dimensions AR, incluent les centroïdes (ou barycentres) des boîtes englobantes 20 associées à chaque caractère. Plus précisément, le programme détecte si les centroïdes sont alignés sur une même ligne et calcule les distances séparant les centroïdes de boîtes englobantes 20 associées à des caractères adjacents pour déterminer s'ils appartiennent à un même mot. Les caractères regroupés sont associés dans une boîte englobante collective.

Dans l'étape 150, le programme examine le contenu de chaque boîte englobante collective et élimine celles qui ne semblent pas contenir un champ de texte. En effet, durant les phases décrites plus haut, il se peut que des lignes soient malencontreusement formées par regroupement d'objets dont l'un au moins n'est pas un caractère. Cette étape permet donc d'éliminer des faux positifs.

On sait que différentes régions de texte ont des distributions distinctes d'orientations du gradient : la raison en est que les gradients d'amplitude élevée sont généralement perpendiculaires aux contours qui forment les caractères. Le programme utilise pour cette étape un descripteur de texture basé sur un histogramme de gradient orienté ou HOG (de l'anglais « Histogram of oriented gradient ») qui est connu en reconnaissance de texte. Classiquement :
- la zone à reconnaitre est subdivisée en Nl lignes et Nc colonnes de façon globale sur l'image,
- un histogramme est calculée sur chacune des NlxNc cellules,
- les histogrammes sont concaténés les uns avec les autres pour toute l'image.

Selon le procédé de l'invention, le programme est avantageusement agencé pour subdiviser la boîte englobante 20 de chaque objet en 3 lignes et 1 colonne car ce découpage permet d'améliorer significativement la décision « mot » ou « pas mot ». Ainsi, sur chacune des trois cellules de chaque boîte englobante 20 contenant a priori un caractère est calculé un histogramme. Les histogrammes sont ensuite concaténés les uns aux autres puis introduits dans un classifieur (ici encore de type SVM) pour décider si la boîte englobante collective correspond à du texte. On notera que le découpage est fortement dépendant de la taille des caractères. La boîte englobante 20 dans laquelle on fait le découpage doit être à la taille de chaque caractère (si la boîte englobante 20 d'un caractère fait 28 pixels x 28 pixels initialement mais que le caractère n'en occupe que 50%, on redimensionne la boîte pour que le caractère en occupe la totalité, puis on fait le découpage).

Dans l'étape 160, le programme procède, dans chaque englobante collective, à une analyse de couleur de l'image (deux parties de l'image avant la réalisation de cette étape sont représentées sur les figures 4.a et 5.a) : l'objectif ici est de saturer les grandes différences dans l'image et d'amplifier les petites différences en saturant les canaux de couleur (RGB, c'est-à-dire rouge, vert, bleu) pour faire ressortir la couleur des caractères (dans le cas d'une image noir et blanc, on agira sur les niveaux de gris). Pour cela, le programme effectue un renforcement du contraste qui consiste à adapter de façon locale le contraste de l'image par une inhibition latérale - différence des pixels voisins - pondérée par la distance euclidienne entre les pixels. On ne retient que les plus forts gradients. Finalement, le programme adapte également l'image afin d'obtenir une balance globale de blanc (voir les deux parties de l'image après l'étape 160 sur les figures 4.b et 5.b). Cette étape permet d'améliorer le contraste et de corriger la couleur. Il aurait pu être alternativement utilisé un algorithme d'égalisation d'histogramme mais un tel algorithme produit des artefacts et des couleurs artificielles dans les fonds d'images qui risquent de compliquer le traitement ultérieur de l'image.

L'étape 170 vise à supprimer le fond de l'image en vue de s'affranchir de tout élément de fond y figurant tels que des éléments de sécurité ou de décor, susceptible de perturber ultérieurement la reconnaissance de caractères.

L'étape précédente a permis d'améliorer la couleur de l'image et de saturer les caractères en noir. Il est dès lors plus facile de détecter les contours des caractères. Le procédé de l'invention mis en oeuvre par le programme utilise à cette fin un filtre de détection de contour et plus particulièrement un filtre de Sobel. La sortie de détection de contours fournit de manière automatique des marqueurs, liés à chaque caractère, qui vont former un masque. L'image obtenue en sortie (figure 5.c) est ainsi utilisée comme un masque dans une approche de segmentation par arbre de composantes connexes. De façon générale, les arbres de composantes connexes associent à une image de niveaux de gris, une structure de données descriptive induite par une relation d'inclusion entre les composantes connexes binaires obtenues par l'application successives des lignes de niveau. L'utilisation du masque permet de ne sélectionner dans l'arbre que ce qui concerne les caractères. Cette sélection est réalisée de manière automatique de sorte que la segmentation par arbre de composantes connexes peut être effectuée de manière automatique, sans intervention humaine, alors que, classiquement, la segmentation par arbre de composantes connexes met en oeuvre un processus interactif avec un opérateur. La segmentation d'un champ par le procédé de l'invention peut ainsi être réalisée beaucoup plus rapidement que qu'avec le procédé classique. Des essais menés par la Demanderesse ont montré que la segmentation par le procédé de l'invention était plus rapide dans un rapport supérieur à 60 voire 70. Ainsi, la segmentation selon l'invention permet de réduire le temps de calcul. On notera par ailleurs que, dans cette approche utilisant un masque, il n'est pas nécessaire de sélectionner un marqueur pour le fond de l'image.

La reconnaissance de caractères effectuée par le programme à l'étape 180 peut mettre en oeuvre n'importe quel algorithme de reconnaissance de caractères. Plus précisément, le programme applique un modèle de segmentation et de reconnaissance des mots qui est basé sur une architecture d'apprentissage profond (ou « deep learning ») se fondant sur une combinaison des réseaux neuronaux convolutifs (CNN) et des LSTM (CNN de l'anglais Convolutional Neural Network, LSTM de l'anglais Long Short-Term Memory). Dans le cas présent, le réseau neuronal à convolution donne des résultats particulièrement bons car le fond de l'image a été éliminé avant sa mise en oeuvre. Cette élimination du fond diminue le taux de faux positifs au cours de l'OCR ; et évite en particulier l'apparition de caractères fantômes, c'est-à-dire de motifs issus du fond et/ou des éléments de sécurité ou de décor, ces motifs ayant une forme proche de celle d'un caractère et étant reconnue de façon erronée comme étant un caractère au cours de l'OCR.

De préférence, on effectuera en variante une approche multi-échelle. En effet, les caractères qui sont plus grands que la fenêtre utilisée lors de l'étape 110 sont souvent sur-segmentés. Pour éviter cet inconvénient, le procédé selon l'invention prévoit de réaliser les étapes 110 et 120 à différentes résolutions, les dimensions de la fenêtre restant identiques. En pratique, le programme procède à plusieurs passes de balayages et diminue la résolution après chaque passe pour éliminer à chaque fois tous les objets qui ne rentrent pas en totalité dans la fenêtre mais qui ont des tailles inférieures à celle d'un caractère. A titre d'exemple, la résolution initiale est de 2000x2000 pixels et on procède à cinq diminutions de la résolution (la résolution est diminuée de moitié à chaque fois). Un nombre de cinq diminutions représente un bon compromis efficacité / temps de calcul.

On notera que les critères géométriques pertinents pour le regroupement des caractères et le choix des différents paramètres permettant d'aboutir à une détection efficace des mots ont été sélectionnés afin de disposer d'un jeu de paramètres efficaces pour chaque type d'images (en fonction de la plage de longueurs d'onde utilisée pour la numérisation : visible, IR et UV).

Bien entendu, l'invention n'est pas limitée au mode de mise en oeuvre décrit mais englobe toute variante entrant dans le champ de l'invention telle qu'elle est définie dans les revendications jointes.

En particulier, le procédé a été décrit dans sa version la plus performante quel que soit le dispositif de numérisation utilisé.

Pour une numérisation par un scanner à plat, le procédé de l'invention peut ne comprendre que les étapes suivantes :
- renforcer un contraste de l'image ;
- détecter des contours d'objets présents dans l'image pour créer un masque faisant ressortir les caractères ;
- segmenter l'image en appliquant le masque à l'image pour en extraire les objets visibles au travers du masque ;
- effectuer une reconnaissance de caractères sur les objets extraits.

Pour une numérisation par smartphone, le procédé de l'invention peut ne comprendre que les étapes suivantes :
- segmenter l'image pour identifier dans celle-ci des objets ;
- définir une boîte englobante autour de chaque objet et effectuer une première sélection pour sélectionner les boites englobantes contenant supposément un caractère en fonction d'au moins une caractéristique dimensionnelle théorique d'un caractère alphanumérique ;
- effectuer une deuxième sélection comprenant l'application à chaque boîte englobante sélectionnée de descripteurs de forme et la mise en oeuvre d'un algorithme de prise de décision pour sélectionner, sur la base des descripteurs, les boîtes englobantes contenant supposément un caractère ;
- regrouper les boîtes englobantes en fonction de positions relatives des boîtes englobantes ;
- effectuer une troisième sélection en divisant chacune de ces boîtes englobantes en une pluralité de cellules pour chacune desquelles est déterminé un descripteur de texture sous forme d'un histogramme de gradient orienté, les histogrammes étant ensuite concaténés et un algorithme de prise de décision étant mis en oeuvre pour sélectionner, sur la base des descripteurs, les boîtes englobantes contenant supposément un caractère ;
- effectuer une reconnaissance de caractères sur les boîtes englobantes finalement sélectionnées.

Dans tous les cas, l'approche multi-échelle est facultative.

Il est possible de combiner plusieurs classifieurs. Ou d'utiliser d'autres classifieurs que ceux indiqués. De préférence, chaque classifieur utilisé sera d'un type compris dans le groupe suivant : SVM (de l'anglais « Support Vector Machine »), RVM (de l'anglais « Relevance Vector Machine »), K plus proches voisins (ou KNN), Random Forest. On notera par exemple que le classifieur RVM permet une interprétation probabiliste permettant d'avoir moins d'exemples pour la phase d'apprentissage.

Il est possible de faire des regroupements par ligne ou par mot. On tiendra par exemple compte du type de document : ainsi sur les documents d'identité d'origine britannique, il y a parfois entre les lettres de grands espaces qui laisse l'arrière-plan très apparent : il est plus performant d'effectuer un regroupement par mot pour ce type de document.

Pour l'étape 150, d'autres découpages sont envisageables et notamment 1 colonne et 7 lignes.

Les images peuvent être traitées en couleurs ou en niveaux de gris. En niveaux de gris, l'utilisation du masque permet d'éliminer un grand nombre d'éléments parasites.

En variante, plusieurs autres solutions de segmentation auraient pu être envisagées comme le seuillage global ou adaptatif, un mélange de gaussiennes ou toute autre technique afin d'isoler de façon efficace les caractères de l'image.

Les moments de Krawtchouk peuvent être utilisés seuls ou en combinaison avec d'autres types de moment et par exemple des descripteurs de forme basés également sur des moments parmi les suivants : moments de Fourier, de Legendre, de Zernike, de Hu et des descripteurs extraits par un réseau de neurones à convolution de type LeNet. On notera que les moments de Krawtchouk deviennent des descripteurs efficaces pour les caractères en utilisant des polynômes d'ordre 9 alors que des polynômes d'ordre 16 sont nécessaires pour les moments de Legendre, 17 pour les moments de Zernike et plus de 30 pour les moments de Fourier.

On notera que le procédé de l'invention est particulièrement bien adapté pour le traitement de documents ayant des fonds hétérogènes. Le procédé peut être mis en oeuvre de la même manière pour le traitement de documents ayant des fonds homogènes. On peut aussi prévoir une étape préalable de déterminer si le fond du document est homogène et, dans l'affirmative, passer les étapes de détection de contour et de segmentation par masque. Cette segmentation est surtout utile parce qu'elle élimine une grande partie du fond du document qui pourrait altérer la reconnaissance de caractère. Or, avec un fond homogène, ce risque est limité. Un autre type de segmentation peut éventuellement être envisagé.

La création du masque selon l'invention permet d'automatiser la mise en oeuvre d'algorithme de résolution de l'arbre que celui-ci concerne une image en couleurs ou en niveaux de gris même si les résultats obtenus avec l'arbre de composantes connexes sont meilleurs avec des niveaux de gris pour la reconnaissance de caractères dans des documents d'identité.

Le dispositif peut avoir une structure différente de celle décrite. Le programme d'acquisition d'image peut notamment être stocké dans une mémoire de l'organe de capture pour être exécuté directement par celui-ci. Le dispositif et l'organe de capture peuvent être incorporés dans un même appareil.

## Revendications

1. Procédé de reconnaissance de caractères dans une image d'un document comprenant au moins un champ alphanumérique, le procédé comprenant les étapes de :
- renforcer un contraste de l'image pour faire ressortir les caractères présents dans l'image ;
- détecter des contours d'objets présents dans l'image pour créer un masque faisant ressortir les caractères ;
- segmenter l'image en utilisant un arbre à composantes connexes et en lui appliquant le masque de manière à extraire de l'image les caractères ;
- effectuer une reconnaissance de caractères sur les objets extraits.

2. Procédé selon la revendication 1, dans lequel la reconnaissance de caractère est réalisée par un réseau de neurones.

3. Procédé selon la revendication 2, dans lequel le réseau de neurones est de type à convolutions.

4. Procédé selon l'une quelconque des revendications précédentes, dans lequel le document a un fond hétérogène.

5. Procédé selon l'une quelconque des revendications 1 à 3, comprenant une étape préalable de déterminer si le fond du document est homogène et, dans l'affirmative, passer les étapes de détection de contour et de segmentation par masque.

6. Procédé selon l'une quelconque des revendications précédentes, dans lequel le renforcement du contraste est obtenu en adaptant de façon locale le contraste de l'image entre des pixels voisins en tenant compte d'une différence entre pixels pondérée par une distance euclidienne entre ceux-ci.

7. Procédé selon la revendication 6, dans lequel l'adaptation est réalisée en vue d'obtenir une balance globale de blanc.

8. Procédé selon l'une quelconque des revendications précédentes, la détection de contour est réalisée en appliquant à l'image un filtre de Sobel.

9. Procédé selon l'une quelconque des revendications précédentes, dans lequel le réseau de neurones est de type à convolutions et à mémoire de court et long terme.

10. Dispositif de reconnaissance de caractère comprenant une unité informatique (1) pourvue des moyens de sa liaison à un appareil de numérisation agencé pour réaliser une numérisation d'un document écrit, **caractérisé en ce que** l'unité informatique (1) comprend au moins un processeur et une mémoire contenant un programme mettant en oeuvre le procédé selon l'une quelconque des revendications précédentes.
